(19) Europäisches Patentamt
European Patent Office
Office européen des brevets

(11) **EP 1 008 067 B1**

(12) **EUROPÄISCHE PATENTSCHRIFT**

(45) Veröffentlichungstag und Bekanntmachung des Hinweises auf die Patenterteilung:
**31.10.2001   Patentblatt 2001/44**

(51) Int Cl.$^7$: **G06F 17/30**

(21) Anmeldenummer: **98949934.8**

(22) Anmeldetag: **24.08.1998**

(86) Internationale Anmeldenummer:
**PCT/DE98/02477**

(87) Internationale Veröffentlichungsnummer:
**WO 99/10819 (04.03.1999 Gazette 1999/09)**

(54) **VERFAHREN UND SYSTEM ZUR RECHNERGESTÜTZTEN ERMITTLUNG EINER RELEVANZ EINES ELEKTRONISCHEN DOKUMENTS FÜR EIN VORGEBBARES SUCHPROFIL**

METHOD AND SYSTEM FOR COMPUTER ASSISTED DETERMINATION OF THE RELEVANCE OF AN ELECTRONIC DOCUMENT FOR A PREDETERMINED SEARCH PROFILE

PROCEDE ET SYSTEME POUR LA DETERMINATION ASSISTEE PAR ORDINATEUR DE L'UTILITE D'UN DOCUMENT ELECTRONIQUE PAR RAPPORT A UN PROFIL DE RECHERCHE PREDETERMINABLE

(84) Benannte Vertragsstaaten:
**DE FR IT**

(30) Priorität: **26.08.1997   DE 19737145**

(43) Veröffentlichungstag der Anmeldung:
**14.06.2000   Patentblatt 2000/24**

(73) Patentinhaber: **SIEMENS AKTIENGESELLSCHAFT 80333 München (DE)**

(72) Erfinder:
• **KOLPATZIK, Bernd D-81737 München (DE)**
• **PFEFFERER, Leo D-81375 München (DE)**
• **SCHAPPERT, Albert D-85244 Röhrmoos (DE)**

(56) Entgegenhaltungen:
• **SUMNER R G JR ET AL: "An investigation of relevance feedback using adaptive linear and probabilistic models" FIFTH TEXT RETRIEVAL CONFERENCE (TREC-5) (NIST SP 500-238), FIFTH TEXT RETRIEVAL CONFERENCE (TREC-5) (NIST SP 500-238), GAITHERSBURG, MD, USA, 20-22 NOV. 1996, Seiten 555-570, XP002090102 1997, Gaithersburg, MD, USA, Nat. Inst. Standards & Technol, USA**
• **OLSEN K A ET AL: "Visualization of a document collection: the VIBE system" INFORMATION PROCESSING & MANAGEMENT, 1993, UK, Bd. 29, Nr. 1, Seiten 69-81, XP000574984 ISSN 0306-4573**
• **EGGHE L: "A new method for information retrieval, based on the theory of relative concentration" PROCEEDINGS OF THE 13TH INTERNATIONAL CONFERENCE ON RESEARCH AND DEVELOPMENT IN INFORMATION RETRIEVAL, BRUSSELS, BELGIUM, 5-7 SEPT. 1990, Seiten 469-494, XP002090103 ISBN 0-89791-408-2, 1989, New York, NY, USA, ACM, USA**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Verfahren und System zur rechnergestützten Ermittlung einer Relevanz eines elektronischen Dokuments für ein vorgebbares Suchprofil.

Die Erfindung bezieht sich auf ein Verfahren und ein System, womit die Relevanz von Dokumenten, wie sie beispielsweise bei einer Internetsuche gefunden werden, bezüglich vorgegebener Interessenprofile dargestellt werden kann.

Die zunehmende elektronische Datenflut in Wissenschaft, Ingenieurwesen und Wirtschaft erschwert das Auffinden und den Zugriff auf relevante, verläßliche und möglichst vollständige Informationen. Bisherige Lösungsvorschläge für Data Mining und Visualisierung großer Informationsmengen, insbesondere von Volltexten und WEB-Seiten, sind häufig weder anwenderfreundlich noch effizient genug für den praktischen Einsatz.

Bestehende Technologien, wie sie z. B. bei Internet Recherchen angewendet werden, beschränken sich zur Zeit noch überwiegend auf die Ausgabe von Texten oder unübersichtlichen Listen von Quellenangaben. Ansätze zur Visualisierung sind zwar in der Literatur dokumentiert, beschränken sich aber entweder auf die Visualisierung wissenschaftlicher Daten, oder vernachlässigen die Aspekte der Erschließung von Informationsbeständen und die Ankopplung an die Visualisierung. Aus dem Artikel von T. Führing, K. Jacoby, R. Michelis, J. Panyr "Kontextgestaltgebung: Eine Metapher zur Visualisierung und Interaktion mit komplexen Wissensbeständen", erschienen in den Proceedings des 4. Internationalen Symposiums für Informationswissenschaft (ISI '94) Band 16, ist es bekannt eine approximative Einbettung formaler Kontexte in 3D-Informationsräume durchzuführen, deren formale Semantik über den Abstandsbegriff auf der Grundlage des Prinzips "kontextuelle Nähe ≈ räumliche Nähe" definiert wird. Hierdurch ist es möglich binäre formale Kontexte darzustellen.

Aus [1] und [2] ist bekannt, Dokumente hinsichtlich der Relevanz dieser Dokumente bezüglich vorgegebener Schlüsselworte zu analysieren.

Ferner ist aus [3] bekannt, Dokumente hinsichtlich der Häufigkeit des Auftretens eines Schlüsselwortes zu untersuchen.

Der Erfindung liegt die Aufgabe zu Grunde ein Verfahren und ein System für die Veranschaulichung mehrwertiger formaler Kontexte anzugeben.

Diese Aufgabe wird für das Verfahren gemäß den Merkmalen des Patentanspruches 1 und für das System gemäß den Merkmalen des Patentanspruches 15 gelöst.

Bei dem Verfahren zur rechnergestützten Ermittlung einer Relevanz eines elektronischen Dokuments für ein vorgebbares Suchprofil werden mindestens folgende Schritte durchgeführt:

a) es wird das Suchprofil, das mindestens ein Wort umfaßt, erstellt;

b) für jedes Wort des Suchprofils wird die Auftrittshäufigkeit des Wortes in dem elektronischen Dokument bestimmt;

c) unter Verwendung der Auftrittshäufigkeit jedes Wortes wird für das elektronische Dokument ein Ergebnisprofil bestimmt;

d) unter Verwendung des Suchprofils und des Ergebnisprofils des elektronischen Dokuments wird ein Vektor für das Suchprofil bestimmt, wobei jedes Wort des Suchprofils eine Vektorkomponente und ein vorgebbarer Wert ein Wert der Vektorkomponente ist, und ein Vektor für das Ergebnisprofil bestimmt, wobei jedes Wort des Suchprofils eine Vektorkomponente und die entsprechende Häufigkeit ein Wert der Vektorkomponente ist;

e) es wird ein Winkel zwischen dem Vektor des Suchprofils und dem Vektor des Ergebnisprofils bestimmt;

f) unter Verwendung des Winkels wird die Relevanz bestimmt.

Diese Relevanzbestimmung läßt sich mit relativ geringem Rechenaufwand durchführen, so daß viele Suchprofile in bezug auf viele Dokumente analysiert werden können und gleichzeitig ein akzeptables Zeitverhalten erreicht wird.

Das System zur rechnergestützten Ermittlung einer Relevanz eines elektronischen Dokuments für ein vorgebbares Suchprofil weist mindestens folgende Merkmale auf:

a) es ist ein Rechner (COMP) vorhanden, der derart eingerichtet ist, daß folgende Schritte durchführbar sind:

- es wird das Suchprofil, das mindestens ein Wort umfaßt, erstellt;
- für jedes Wort des Suchprofils wird die Auftrittshäufigkeit des Wortes in dem elektronischen Dokument bestimmt;
- unter Verwendung der Auftrittshäufigkeit jedes Wortes wird für das elektronische Dokument ein Ergebnisprofil bestimmt;
- unter Verwendung des Suchprofils und des Ergebnisprofils des elektronischen Dokuments wird ein Vektor für das Suchprofil bestimmt, wobei jedes Wort des Suchprofils eine Vektorkomponente und ein vorgebbarer Wert ein Wert der Vektorkomponente ist, und ein Vektor für das Ergebnisprofil bestimmt, wobei jedes Wort des Suchprofils eine Vektorkomponente und die entsprechende Häufigkeit ein Wert der Vektorkomponente ist;
- es wird ein Winkel zwischen dem Vektor des Suchprofils und dem Vektor des Ergebnisprofils bestimmt;

- unter Verwendung des Winkels wird die Relevanz bestimmt;

b) es ist eine grafische Rechneranzeigevorrichtung (DIS) vorhanden;

c) es sind Mittel zum Zugriff (Z) auf elektronische Dokumente (D) vorhanden. Weiterbildungen der Erfindung ergeben sich aus den abhängigen Ansprüchen.

Vorzugsweise werden ein erstes, den Vektor eines Suchprofils repräsentierendes, Element und ein zweites, den Vektor eines Ergebnisprofils eines elektronischen Dokuments repräsentierendes, Element dargestellt.

In einer weiteren Ausgestaltung der Erfindung werden mehrere zweite Elemente, die jeweils einen Vektor eines Ergebnisprofils eines elektronischen Dokuments repräsentieren, derart dargestellt, daß zweite Elemente von elektronischen Dokumenten, welche eine Relevanz aufweisen, die kleiner ist als ein Schwellenwert, örtlich näher beieinander dargestellt werden als zweite Elemente von elektronischen Dokumenten, welche eine Relevanz aufweisen, die nicht kleiner ist als der Schwellenwert.

Vorteilhaft wird die Erfindung durch Anwendung einer Winkelfunktion auf die gefundenen Winkel zwischen den Suchvektoren und den Ergebnisvektoren weitergebildet und in Form einer Relevanzmatrix weiterverarbeitet, da diese als Ahnlichkeitsmatrix interpretiert oder auf einfache Weise in eine solche umgewandelt werden kann.

Vorteilhaft wird die Erfindung unter Verwendung einer Ähnlichkeitsmatrix weitergebildet, welche aus der Relevanzmatrix abgeleitet wird, und die Ähnlichkeit einzelner Dokumente untereinander angibt. Auf diese Weise läßt sich die Metapher "räumliche Nähe = inhaltliche Nähe" in der graphischen Darstellung sehr einfach realisieren und somit ist bei der Aufbereitung für die Graphik ein geringerer Rechenaufwand erforderlich.

Vorteilhaft wird die Erfindung durch die Anwendung der Kosinusfunktion auf die gefundenen Winkel zwischen den Vektoren weitergebildet, da der Kosinus von $0°$ = 1 ist. Somit wird bei einem Übereinanderliegen der Vektoren eine Identität der Dokumente angegeben, was dem Sachverhalt, der durch die Vektoren dargestellt wird, entspricht.

Vorteilhaft wird das erfindungsgemäße Verfahren durch die Anwendung in einem Rechnernetzwerk weitergebildet, da häufig aus Rechnernetzwerken elektronische Dokumente als Suchergebnisse erhalten werden, welche innerhalb eines akzeptablen Zeitabschnitts nicht von Menschen analysiert werden können.

Vorteilhaft wird in einer Weiterbildung der Erfindung als Rechnernetzwerk das Internet verwendet, da das Internet bzw. World Wide Web ein weit verbreitetes Netzwerk darstellt und somit eine hohe Nutzerbasis für das erfindungsgemäße Verfahren vorliegt.

Vorteilhaft wird die Erfindung durch die Verwendung von elektronischen Dokumenten aus Datenbanken weitergebildet, da hierdurch Bibliotheken und andere Datenbanken für elektronische Dokumente sinnvoll, transparent und schnell veranschaulicht werden können.

Vorteilhaft ist ein System bestehend aus einem Rechner einem Display und Mittel zum Zugriff auf elektronische Dokumente, welches das erfindungsgemäße Verfahren und vorzugsweise seine Weiterbildungen ausführt, da die Hardware-Mittel weit verbreitet sind und eine gute Verfügbarkeit dieser Mittel gewährleistet ist. Ebenfalls ist der Zugriff auf elektronische Dokumente durch weitverbreitete Netzzugangsmittel und öffentliche und private Netze gewährleistet.

Im Folgenden werden Ausführungsbeispiele der Erfindung anhand von Figuren weiter erläutert.

Figur 1     zeigt ein Beispiel zur Bildung einer Relevanzmatrix

Figur 2     veranschaulicht weitere Verarbeitungsschritte des Verfahrens

Figur 3     veranschaulicht die Winkelberechnung

Figur 4     zeigt einen Bildschirmausschnitt nach Durchführung des Verfahrens.

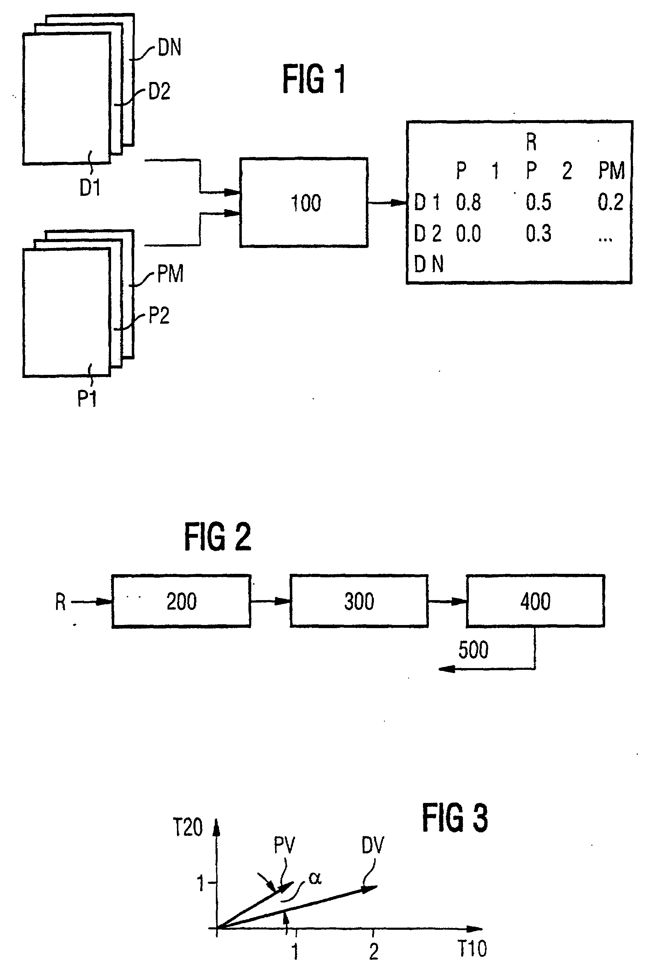

Wie Figur 1 zeigt, werden bei einer Ausgestaltung des erfindungsgemäßen Verfahrens elektronische Dokumente D1, D2 und DN verwendet und anhand von Suchprofilen P1, P2 und PM, welche fallweise gewichtete Suchbegriffe enthalten, wird die Information, welche in den Dokumenten D1 bis DN enthalten ist, erschlossen. Bei den verwendeten Dokumenten D1 bis DN kann es sich beispielsweise um Dokumente handeln, welche im World Wide Web bei einer Net-Suche gefunden wurden. Bei den Profilen kann es sich um handerstellte bzw. vom Benutzer definierte Suchprofile handeln, welche fallweise an den einzelnen Begriffen Gewichtungen gemäß ihrer Wichtigkeit aufweisen. Ebenfalls ist es denkbar als Profile auch Dokumente zu verwenden. Beispielsweise ist es auch denkbar Suchprofile anhand von Wortstatistiken zu erstellen, welche anhand von Dokumenten durchgeführt werden, die der Bediener für höchst interessant hält und dem Rechner zur Verfügung stellt. Ebenso ist es denkbar Suchprofile unterstützt durch einen fachspezifischen Thesaurus einzugeben. Auch können durch Beobachten des Benutzerverhaltens und durch Lernkomponenten Suchprofile automatisch generiert werden

In einem Bearbeitungsschritt 100 wird die Relevanz zwischen den eimzelnen Profilen P1 bis PM und den einzelnen Dokumenten D1 bis DN bestimmt. Vorzugsweise geschieht dies für alle Dokumente und alle Profile, so daß eine Relevanzmatrix R entsteht. Zur Bestimmung der Relevanz wird vorzugsweise die Worthäufigkeit in den Dokumenten ermittelt und übereinstimmende Worte mit den jeweiligen Suchprofilen werden gesucht. Anschläeßend werden die Suchprofile und die je Dokument und Suchprofil ermittelten Ergebnisprofile als Vektor dargestellt und in der Vektorebene, die durch die Begriffe des Suchvektors aufgespannt wird, wird der Winkel zwischen dem Suchvektor und dem Ergebnisvektor bestimmt und als Maß für die Relevanz des Dokumentes, das untersucht wurde, verwendet. In Figur 1 ist die Relevanzmatrix R mit Zahlen und Buchstaben versehen, um anzudeuten, wie eine Relevanzmatrix aussehen kann. Waagerecht sind beispielsweise die Profile P1 bis PN aufgetragen und senkrecht die Dokumente D1 bis DN. An den Schnittpunkten der jeweiligen Spalten und Zeilen stehen die Relevanzwerte. Hierdurch wird erstmals ein mehrwertiger formaler Kontext realisiert, wodurch die i-te-Zeile der Matrix R den Relevanzen des i-ten-Dokuments bezüglich aller Profile k entspricht.

Wie Figur 2 weiter zeigt, kann die Relevanzmatrix R in Prozeßschritten 200, 300 und 400 weiterverarbeitet werden. Beispielsweise steht über eine Schnittstelle 500 der Zugriff auf Dokumente und Suchprofile und Browser zur Verfügung. In einem ersten Schritt 200 wird beispielsweise aus der Relevanzmatrix eine Ähnlichkeitsmatrix berechnet, wozu aus den Relevanzwerten für einzelne Dokumente mit anderen Dokumenten eine Korrelationsanalyse durchgeführt wird. Bevorzugt wird die Korrelationsmatrix C durch Berechnung der Korrelationskoeffizienten $C_{ik}$ zwischen den Dokumenten bezüglich der Suchprofile aus der Matrix R durch folgende Schritte bestimmt:

- Normierung der Zeilenvektoren $r_i$ der Matrix R:

$$q_i = (r_i - m_i)$$

mit Mittelwert

$$m_i = 1/N \ \Sigma \ r_i$$

Länge $q_i$ und Standardabweichung

$$\sigma_i = sqrt(\Sigma(r_i - m_i)^2)$$

- Berechnung der Korrelationskoeffizienten zu

$$c_{ik} = \frac{q_i q_k^{\ T}}{\sigma_i \sigma_k}$$

und der Matrix C.
- C entspricht dabei in der Form der bisherigen Ähnlichkeitsmatrix, bzw. einer Gegenstands-Gegenstandsmatrix.

Beispielsweise kann der Mechanismus zur Berechnung der Ähnlichkeit durch unterschiedliche Maßnahmen verbessert werden.

- In einem ersten Schritt können beispielsweise Stopwörter eliminiert werden, welche im allgemeinen von der Domäne der Abhandlung des speziellen Dokumentes abhängig sind. In vielen Fällen können dieses Konjunktionen, Artikel, Präpositionen sein, die sicher entfernt werden können, ohne daß dabei der Inhalt des Dokumentes verfremdet wird.

- Fallweise kann es auch möglich sein domänenspezifische Worte zu entfernen, um die Signifikanz des gefundenen Maßes zu verbessern.

- Als weitere Maßnahme kann die Metrik des verwendeten Systems auf wichtige Aspekte der Applikationsdomäne fokussiert werden. In diesem Fall können nur einige wenige Konzepte oder Aspekte der beschriebenen Worte aus domänenspezifischen Thesauri verwendet werden, oder Ontologien.

- Als weitere Maßnahme kann die Unterscheidungskraft des Verfahrens verbessert werden, indem eine umgekehrte Dokumentfrequenzkorrektur eingeführt wird. Bei dieser Methode werden Wortgewichte verwendet, wobei Worte, die in vielen Dokumenten auftreten, mit einem logarithmischen Faktor F gewichtet werden. Dieser Faktor bestimmt sich beispielsweise so, daß F = log(Anzahl der Dokumente D, welche das Wort $W_j$ enthalten/durch die Gesamtzahl der Dokumente). Als Folge dieser Maßnahme erhält man ein wortabhängig gewichtetes Ähnlichkeitsmaß.

In einem Verarbeitungsschritt 300 findet beispielsweise die Umsetzung der Ähnlichkeitsmatrix für eine räumliche Darstellung gemäß dem anfangs zitierten Stand der Technik statt. In einem Verarbeitungsschritt 400 wird gemäß dem Stand der Technik der in Schritt 300 zur Verfügung gestellte Datensatz dreidimensional visualisiert.

- Darstellung der Korrelationsmatrix C durch räumliche Abstände nach einem bekannten Verfahren.

  - Anwendung der bekannten Optimierungsalgorithmen zur grafischen Aufbereitung.

- Berücksichtigung der Merkmale in der graphischen Darstellung.

  - Ein Dokument ist relevant zu einem Profil, wenn wenigstens ein Wort des Profils einmal im Dokument auftritt. → Der Gegenstand "Dokument i" hat das Merkmal "Profil k".
  - Visualisierung im 3D-Raum
  - VRML: Anwählen der Dokumente und Profile zeigt die Dokument- und Profildateien im Fenster eines Internet-Browsers (z. B.: Netscape).

Der Weg über eine Ahnlichkeitsmatrix, welche aus der Relevanzmatrix abgeleitet wird, ist beim erfindungsgemäßen Verfahren jedoch nicht zwingend erforderlich. Es besteht ebenso die Möglichkeit eines direkten Ansatzes, wobei die Relevanzmatrix R direkt in einen dreidimensionalen Raum umgesetzt wird. Hier wird nicht die Metapher der Ähnlichkeit zwischen Dokumenten und der räumlichen Nähe benutzt, sondern vielmehr die Relevanz eines Dokuments in Bezug auf ein bestimmtes Merkmal in eine räumliche Nähe umgesetzt. Mit der Erfindung wird erstmals die Integration von Textanalyse, Visualisierung und Retrieval in einem System realisiert. Insbesondere wird durch die Erfindung eine neue Verbindungskomponente angegeben, welche aus den Ergebnissen der Dokumentanalyse die Ähnlichkeit von Dokumenten berechnet. Diese Komponente beruht auf einem Korrelationsverfahren, mit welchem die Korrelationsmatrix berechnet wird, welche anschließend im dreidimensionalen Raum auf einem Computerdisplay visualisiert wird. Hierdurch wird erstmals die Veranschaulichung mehrwertiger formaler Kontexte ermöglicht.

Figur 3 veranschaulicht die Berechnung eines Relevanzwertes eines Dokuments in bezug auf ein Suchprofil. Wie bereits beschrieben, werden dazu die Texte des Dokuments und des Suchprofils als Vektoren dargestellt. Wegen einer einfachen übersichtlichen Darstellung wurde hier lediglich ein Suchprofil mit zwei Worten T10 und T20 gewählt. Beispielsweise werden in diesem Fall epidemologische Dokumente untersucht. Der Begriff T10 bedeutet beispielsweise influenza und T20 bedeutet outbreak. DV bezeichnet den Dokumentenvektor und PV bezeichnet den Suchprofilvektor. An den jeweiligen Achsen T10 und T20 ist die Häufigkeit der Worte angegeben. Der Winkel $\alpha$ dient als Maß für die Übereinstimmung des Suchprofilvektors PV und des Dokumentenvektors DV. Insbesondere kann hierfür der Kosinus des Winkels gebildet werden, da bei einer Übereinstimmung der beiden Vektoren der Winkel 0 wäre und damit der Kosinus 1, was einer exakten Übereinstimmung entspräche.

Zur Berechnung des Relevanzwertes eines Dokuments bezüglich eines Profiles folgt nun ein Beispiel:

Gegeben sei ein Dokument:

{Influenza report: Large influenza outbreak reaches Paris.}

Zu diesem Dokument wird ein Dokumentenvektor, dessen Dimensionen durch die Begriffe "influenza, large, outbreak, paris, reaches, report" bestimmt sind definiert. Das Dokument wird bezüglich dieser Dimensionen als Dokumentenvektor

$$d = \{2, 1, 1, 1, 1, 1\}$$

dargestellt. Die Elemente des Vektors d entsprechen den Worthäufigkeiten der auftretenden Begriffe.

Ähnlich wie für Dokumente und Dokumentenvektoren wird ein Suchprofil definiert,

{influenza, outbreak},

und ein Profilvektor PV, dessen Elemente Gewichtungen der Begriffsdimensionen "influenza" und "outbreak" entsprechen,

$$PV = \{1, 1\}.$$

Es wird die Projektion des Dokumentenvektors d auf die Ebene des Profilvektors berechnet und es ergibt sich der projizierte Dokumentenvektor, DV={2, 1}. Anschließend wird cos $\alpha$ zwischen DV und PV als Maß für die Relevanz r des Dokuments bezüglich des Profils definiert:

$$r = \cos \alpha = \frac{<DV,PV>}{\|DV\| \, \|PV\|}.$$

<DV,PV> ist das Skalarprodukt der Vektoren DV und PV, $\|.\|$ ist die Länge eines Vektors.

Für die Beispielvektoren DV und PV ergibt sich somit eine Relevanz des Dokuments bezüglich des Profilvektors von

$$r = \frac{(2 + 1)}{\sqrt{5}\sqrt{2}} = 0{,}95.$$

Der Spezialfall r=1, bzw. $\alpha$=0° entspricht der bestmöglichen Relevanz des Dokuments bezüglich des Profils. Ein Wert r=0 ergibt sich bei minimaler Relevanz, bzw. Othogonalität zwischen DV und PV.

Es folgt ein Beispiel zur Berechnung der Korrelationskoeffizienten $C_{ik}$ aus der Relevanzmatrix R:

Gegeben seien zwei Zeilenvektoren $r_i$ und $r_k$ der Matrix R, welche die Relevanzen der Dokumente i und k bezogen auf vier Profile enthält. Die Vektoren der Zeilen i und k enthalten die Elemente,

$$r_i = (0.6, 0.2, 0.4, 0.8)$$

und

$$r_k = \{0.0, 0.1, 0.3, 0.4\}.$$

Daraus ergeben sich die Mittelwerte

$$m_i = 0.5, \; m_k = 0.2.$$

Weiter erhält man

$$q_i = r_i - m_i = (0.1, -0.3, -0.1, 0.3)$$

$$q_k = (-0.2, -0.1, 0.1, 0.2),$$

mit Längen

$$\sigma_i = 0.4472, \ \sigma_k = 0.3162.$$

Für den Korrelationskoeffizienten $c_{ik}$ ergibt sich,

$$c_{ik} = \frac{q_i q_k^T}{\sigma_i \sigma_k} = 0.4243.$$

Dieser Koeffizient wird als Maß der Ähnlichkeit von Dokument i und Dokument k bezüglich der vier Profile interpretiert. Die Matrix C hat die Form einer Gegenstands-Gegenstands-Ähnlichkeitsmatrix und kann mit bekannten Verfahren visualisiert werden.

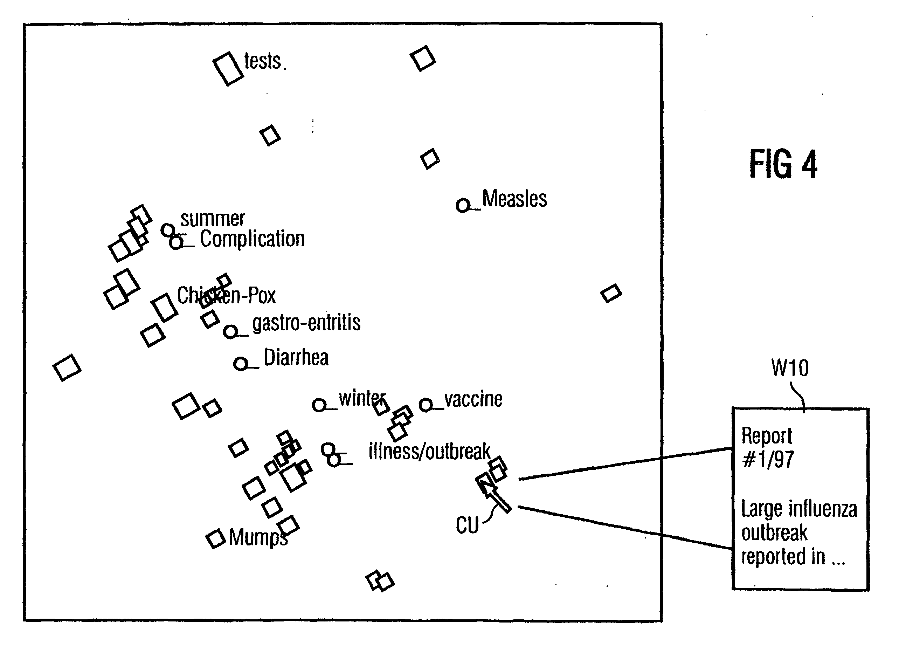

Wie Figur 4 zeigt, kann eine Dokumentenauswertung in bezug auf Interessen bzw. Suchprofile auf einem Bildschirm DIS veranschaulicht werden. Auf dem dargestellten Bildschirmausschnitt sind Dokumente als Würfel und Suchprofile als Kugeln dargestellt. Im einzelnen handelt es sich bei den Suchprofilen um summer, Complication, Measles, Chicken-Pox dazu gas-troentritis, Diarrhea, winter, Vaccine illness/outbreak, flu, Mumps. Die Dokumente sind im einzelnen nicht bezeichnet. Durch anklicken eines Dokumentes mit dem Cursor CU wird beispielsweise ein Fenster 10 angezeigt, in welchem der Inhalt des jeweiligen Dokumentes dargestellt wird. Wichtig ist hierbei, daß durch die Anordnung der einzelnen Dokumente zwischen den einzelnen Suchprofilen genau angegeben wird, inwieweit die einzelnen Suchprofile in bezug auf dieses Dokument relevant sind. Bei der erfindungsgemäß durchzuführenden Analyse der einzelnen elektronischen Dokumente können für die einzelnen Suchbegriffe in den jeweiligen Suchprofilen Gewichtungsfaktoren vergeben werden, damit diese beispielsweise abgeschwächt gewichtet werden können, was zu einer geringeren Häufigkeit in bezug auf die Übereinstimmung bestimmter Worte mit den jeweiligen Dokumenten führen würde. Anstatt eines zweidimensionalen Computer Displays DIS können auch dreidimensionale Anzeigevorrichtungen, wie Virtual-Reality-Räume, Head Mounted Display, 3D-Display oder holographisch arbeitende Anzeigen Verwendung finden.

In diesem Dokument sind folgende Veröffentlichungen zitiert:

[1]: US 5 649 193

[2]: US 5 576 954

[3]: US 5 642 518

**Patentansprüche**

1. Verfahren zur rechnergestützten Ermittlung einer Ähnlichkeit eines ersten elektronischen Dokuments zu mindestens einem zweiten elektronischen Dokument für mindestens ein vorgegebenes Suchprofil, welches mindestens ein Wort umfaßt, mit folgenden Schritten :

    a) für jedes Wort des Suchprofils wird eine zugehörige Auftrittshäufigkeit jeweils in dem ersten und in dem zweiten elektronischen Dokument bestimmt;
    b) unter Verwendung der Auftrittshäufigkeit jedes Wortes jeweils in dem ersten und in dem zweiten elektronischen Dokument wird für das erste und das zweite elektronische Dokument jeweils ein zugehöriges Ergebnisprofil bestimmt;
    c) es wird ein Suchprofilvektor für das Suchprofil bestimmt, wobei jedes Wort des Suchprofils eine Vektorkomponente und ein vorgebbarer Wert ein Wert der Vektorkomponente ist,
    d) es wird jeweils ein Ergebnisprofilvektor für das Ergebnisprofil des ersten und des zweiten elektronischen Dokuments bestimmt, wobei jeweils zumindest ein Wort des Suchprofils eine Vektorkomponente und die entsprechende Auftrittshäufigkeit in dem ersten bzw. dem zweiten elektronischen Dokument ein Wert der Vektorkomponente ist;
    e) unter Verwendung des Suchprofilvektors und jeweils des Ergebnisprofilvektors des ersten und des zweiten elektronischen Dokuments wird für das erste und das zweite elektronische Dokument jeweils eine Relevanz bestimmt;
    f) unter Verwendung der Relevanz des ersten elektronischen Dokuments und der Relevanz des zweiten elektronischen Dokuments wird die Ähnlichkeit bestimmt.

2. Verfahren nach Anspruch 1, bei dem jeweils die Relevanzen des ersten und des zweiten elektronischen Dokuments für mehrere Suchprofile bestimmt werden.

3. Verfahren nach Anspruch 2, bei dem die Ähnlichkeit derart bestimmt wird, daß eine Korrelation zwischen den Relevanzen des ersten elektronischen Dokuments und den Relevanzen des zweiten elektronischen Dokuments bestimmt wird.

4. Verfahren nach einem der Ansprüche 1 bis 3, bei dem

die Relevanz derart bestimmt wird, daß ein Winkel zwischen einem Suchprofilvektor und einem Ergebnisprofilvektor ermittelt wird.

5. Verfahren nach einem der Ansprüche 1 bis 4, bei dem
ein erstes, den Vektor eines Suchprofils repräsentierendes, Element und ein zweites, den Vektor eines Ergebnisprofils eines elektronischen Dokuments repräsentierendes, Element dargestellt werden.

6. Verfahren nach Anspruch 3, bei dem
mehrere zweite Elemente, die jeweils einen Vektor eines Ergebnisprofils eines elektronischen Dokuments repräsentieren, dargestellt werden, derart, daß zweite Elemente von elektronischen Dokumenten, welche eine Relevanz aufweisen, die kleiner ist als ein Schwellenwert, örtlich näher beieinander dargestellt werden als zweite Elemente von elektronischen Dokumenten, welche eine Relevanz aufweisen, die nicht kleiner ist als der Schwellenwert.

7. Verfahren nach Anspruch 2 bis 6, bei dem
unter Verwendung der Relevanzen eine Relevanzmatrix (R) bestimmt wird.

8. Verfahren nach Anspruch 6 oder 7, bei dem
die Ähnlichkeiten für die grafische Darstellung auf einem Rechnerdisplay (DIS) verwendet werden, wobei ein Sinnbild eines ersten elektronischen Dokumentes, welches eine höhere Korrelation mit einem zweiten elektronischen Dokument aufweist als ein drittes, räumlich näher am Sinnbild des zweiten elektronischen Dokumentes dargestellt wird, als das Sinnbild des dritten.

9. Verfahren nach Anspruch 4, bei dem
als Winkelfunktion des Winkels ein Kosinus verwendet wird.

10. Verfahren nach einem der Ansprüche 1 bis 9, bei dem
als elektronische Dokumente (D) Suchergebnisse einer Suche in einem Rechnernetzwerk verwendet werden.

11. Verfahren nach Anspruch 10, bei dem
als Rechnernetzwerk das Internet verwendet wird.

12. Verfahren nach einem der Ansprüche 1 bis 9, bei dem
als elektronische Dokumente (D) Dokumente aus einer Datenbank verwendet werden.

13. Verfahren nach einem der vorangehenden Ansprüche, bei dem als Suchprofile (P) elektronische Dokumente (D) verwendet werden.

14. Verfahren nach einem der vorangehenden Ansprüche, bei dem ein auf der Anzeigevorrichtung (DIS) angezeigtes Sinnbild mittels einer Eingabevorrichtung des Rechners ausgewählt und/oder der Textinhalt des Dokumentes, für das das Sinnbild steht, zur Anzeige gebracht wird.

15. System zur rechnergestützten Ermittlung einer Ähnlichkeit eines ersten elektronischen Dokuments zu mindestens einem zweiten elektronischen Dokument für mindestens ein vorgebbares Suchprofil, welches mindestens ein Wort umfaßt, mit folgenden Merkmalen:

a) es ist ein Rechner (COMP) vorhanden, der derart eingerichtet ist, daß folgende Schritte durchführbar sind:

- für jedes Wort des Suchprofils wird eine zugehörige Auftrittshäufigkeit jeweils in dem ersten und in dem zweiten elektronischen Dokument bestimmt;
- unter Verwendung der Auftrittshäufigkeit jedes Wortes jeweils in dem ersten und in dem zweiten elektronischen Dokument wird für das erste und das zweite elektronische Dokument jeweils ein zugehöriges Ergebnisprofil bestimmt;
- es wird ein Suchprofilvektor für das Suchprofil bestimmt, wobei jedes Wort des Suchprofils eine Vektorkomponente und ein vorgebbarer Wert ein Wert der Vektorkomponente ist,
- es wird jeweils ein Ergebnisprofilvektor für das, Ergebnisprofil des ersten und des zweiten elektronischen Dokuments bestimmt, wobei jeweils zumindest ein Wort des Suchprofils eine Vektorkomponente und die entsprechende Auftrittshäufigkeit in dem ersten bzw. dem zweiten elektronischen Dokument ein Wert der Vektorkomponente ist;
- unter Verwendung des Suchprofilvektors und jeweils des Ergebnisprofilvektors des ersten und des zweiten elektronischen Dokuments wird für das erste und das zweite elektronische Dokument jeweils eine Relevanz bestimmt;
- unter Verwendung der Relevanz des ersten elektronischen Dokuments und der Relevanz des zweiten elektronischen Dokuments wird die Ähnlichkeit bestimmt;

b) es ist eine grafische Rechneranzeigevorrichtung (DIS) vorhanden;
c) es sind Mittel zum Zugriff (Z) auf elektronische Dokumente (D) vorhanden.

**16.** System nach Anspruch 15, bei dem Auswahlmittel vorhanden sind, zur Auswahl eines Sinnbildes auf der Rechneranzeigevorrichtung (DIS).

## Claims

**1.** Method for the computer-assisted ascertainment of a degree of similarity between a first electronic document and at least one second electronic document for at least one prescribed search profile which comprises at least one word, having the following steps:

   a) for each word of the search profile, an associated frequency of occurrence is determined in the first and the second electronic document, respectively;
   b) the frequency of occurrence of each word in the first and the second electronic document, respectively, is used to determine a respective associated result profile for the first and the second electronic document;
   c) a search profile vector is determined for the search profile, with each word of the search profile being a vector component, and a prescribable value being a value of the vector component,
   d) a respective result profile vector is determined for the result profile of the first and the second electronic document, with, in each case, at least one word of the search profile being a vector component, and the corresponding frequency of occurrence in the first and the second electronic document being a value of the vector component;
   e) the search profile vector and the respective result profile vector for the first and the second electronic document are used to determine a respective degree of relevance for the first and the second electronic document;
   f) the degree of relevance of the first electronic document and the degree of relevance of the second electronic document are used to determine the degree of similarity.

**2.** Method according to Claim 1, in which the respective degree of relevance of the first and second electronic documents are determined for a plurality of search profiles.

**3.** Method according to Claim 2, in which the degree of similarity is determined such that a degree of correlation between the degree of relevance of the first electronic document and the degree of relevance of the second electronic document is determined.

**4.** Method according to one of Claims 1 to 3, in which the degree of relevance is determined such that an angle between a search profile vector and a result profile vector is ascertained.

**5.** Method according to one of Claims 1 to 4, in which a first element, representing the vector of a search profile, and a second element, representing the vector of a result profile for an electronic document, are shown.

**6.** Method according to Claim 3, in which a plurality of second elements, each representing a vector of a result profile for an electronic document, are shown such that second elements of electronic documents which have a degree of relevance which is below a threshold value are shown closer to one another in terms of locality than second elements of electronic documents which have a degree of relevance which is not below the threshold value.

**7.** Method according to Claim 2 to 6, in which the degrees of relevance are used to determine a relevance matrix (R).

**8.** Method according to Claim 6 or 7, in which the degrees of similarity are used for graphical representation on a computer display (DIS), with a symbol for a first electronic document, which has a higher degree of correlation to a second electronic document than a third, being shown closer to the symbol for the second electronic document than the symbol for the third.

**9.** Method according to Claim 4, in which the angle's angle function used is a cosine.

**10.** Method according to one of Claims 1 to 9, in which the electronic documents (D) used are search results for a search in a computer network.

**11.** Method according to Claim 10, in which the computer network used is the Internet.

**12.** Method according to one of Claims 1 to 9, in which the electronic documents (D) used are documents from a database.

**13.** Method according to one of the preceding claims, in which the search profiles (P) used are electronic documents (D).

**14.** Method according to one of the preceding claims, in which a symbol displayed on the display apparatus (DIS) is selected using an input apparatus of the computer, and/or the text content of the document represented by the symbol is displayed.

15. System for the computer-assisted ascertainment of a degree of similarity between a first electronic document and at least one second electronic document for at least one prescribable search profile which comprises at least one word, having the following features:

a) a computer (COMP) is available which is set up such that the following steps can be carried out:

- for each word of the search profile, an associated frequency of occurrence is determined in the first and the second electronic document, respectively;
- the frequency of occurrence of each word in the first and the second electronic document, respectively, is used to determine a respective associated result profile for the first and the second electronic document; a search profile vector is determined for the search profile, with each word of the search profile being a vector component, and a prescribable value being a value of the vector component,
- a respective result profile vector is determined for the result profile of the first and the second electronic document, with, in each case, at least one word of the search profile being a vector component, and the corresponding frequency of occurrence in the first and the second electronic document being a value of the vector component;
- the search profile vector and the respective result profile vector for the first and the second electronic document are used to determine a respective degree of relevance for the first and the second electronic document;
- the degree of relevance of the first electronic document and the degree of relevance of the second electronic document are used to determine the degree of similarity;

b) a graphical computer display apparatus (DIS) is available;
c) means for accessing (Z) electronic documents (D) are available.

16. System according to Claim 15, in which selection means are available for selecting a symbol on the computer display apparatus (DIS).

**Revendications**

1. Procédé permettant la détermination assistée par ordinateur d'une similitude d'un premier document électronique avec au moins un deuxième document électronique pour au moins un profil de recherche prédéterminé, qui renferme au moins un mot, le procédé comportant les étapes suivantes:

a) pour chaque mot du profil de recherche, on détermine une fréquence correspondante d'apparition dans le premier et une autre dans le second document électronique;
b) en utilisant la fréquence d'apparition de chaque mot dans le premier et dans le deuxième document électronique, on détermine un profil correspondant de résultat pour le premier document électronique et un autre pour le second;
c) on détermine un vecteur pour le profil de recherche, chaque mot du profil de recherche étant une composante du vecteur et une valeur, qui peut être prédéterminée, étant une valeur des composantes du vecteur;
d) on détermine un vecteur du profil de résultat pour le profil de résultat du premier document électronique et un autre pour le profil de résultat du second document électronique, au moins un mot du profil de recherche étant une composante du vecteur et la fréquence correspondante d'apparition étant une valeur de la composante du vecteur dans le premier et le second document électronique;
e) en utilisant le vecteur du profil de recherche et chacun des vecteurs de profil de résultat du premier et du second document électronique, on détermine, pour chacun d'eux, une caractéristique essentielle;
f) en utilisant la caractéristique essentielle du premier document électronique et la caractéristique essentielle du second document électronique, on détermine la similitude.

2. Procédé selon la revendication 1 au cours duquel on détermine les caractéristiques essentielles du premier et du second document électronique pour plusieurs profils de recherche.

3. Procédé selon la revendication 2 au cours duquel on détermine la similitude de telle sorte qu'une corrélation entre les caractéristiques essentielles du premier et les caractéristiques essentielles du second document électronique est définie.

4. Procédé selon l'une des revendications 1 à 3 au cours duquel on détermine la caractéristique essentielle de telle sorte qu'on recherche un angle entre un vecteur de profil de recherche et un vecteur de profil de résultat.

**5.** Procédé selon l'une des revendications 1 à 4 au cours duquel
on décrit un premier élément, qui représente le vecteur d'un profil de recherche, et un deuxième élément, qui représente le vecteur d'un profil de résultat d'un document électronique.

**6.** Procédé selon la revendication 3 au cours duquel
on décrit plusieurs deuxièmes éléments, qui représentent chacun un vecteur d'un profil de résultat d'un document électronique, de telle sorte que des deuxièmes éléments de documents électroniques, qui comportent une caractéristique essentielle, laquelle est inférieure à une valeur seuil, sont représentés localement plus près l'un de l'autre que des deuxièmes éléments de documents électroniques, qui comportent une caractéristique essentielle, laquelle n'est pas inférieure à la valeur seuil.

**7.** Procédé selon la revendication 2 à 6 au cours duquel,
en utilisant les caractéristiques essentielles, on détermine une matrice (R) de caractéristiques essentielles.

**8.** Procédé suivant la revendication 6 et 7 au cours duquel
on utilise les similitudes pour la représentation graphique sur un écran (DIS) d'ordinateur, un symbole d'un premier document électronique, qui comporte une corrélation plus élevée avec un deuxième document électronique qu'un troisième, étant représenté plus près dans l'espace, du symbole du deuxième document électronique que le symbole du troisième.

**9.** Procédé selon la revendication 4 pour lequel
on utilise un cosinus comme fonction de l'angle.

**10.** Procédé selon l'une des revendications 1 à 9 pour lequel
on utilise, comme documents électroniques (D), des résultats d'une recherche dans un réseau d'ordinateurs.

**11.** Procédé selon la revendication 10 pour lequel
on utilise l'internet comme réseau d'ordinateurs.

**12.** Prôcédé selon l'une des revendications 1 à 9 pour lequel
on utilise, comme documents électroniques (D), des documents provenant d'une banque de données.

**13.** Procédé selon l'une des revendications précédentes pour lequel

on utilise, comme profils de recherche (P), des documents électroniques (D).

**14.** Procédé selon l'une des revendications précédentes au cours duquel
un symbole affiché sur le dispositif d'affichage (DIS) est choisi au moyen d'un dispositif de saisie de l'ordinateur et/ou le texte du document, qui correspond au symbole, est affiché.

**15.** Système permettant la détermination assistée par ordinateur d'une similitude d'un premier document électronique avec au moins un deuxième document électronique pour au moins un profil de recherche prédéterminé, qui renferme au moins un mot, le système comportant les caractéristiques suivantes:

a) il existe un ordinateur (COMP) réglé de telle sorte que les étapes suivantes peuvent être exécutées:

- pour chaque mot du profil de recherche, on détermine une fréquence correspondante d'apparition dans le premier et une autre dans le second document électronique;
- en utilisant la fréquence d'apparition de chaque mot dans le premier et dans le deuxième document électronique, on détermine un profil correspondant de résultat pour le premier document électronique et un autre pour le second;
- on détermine un vecteur pour le profil de recherche, chaque mot du profil de recherche étant une composante du vecteur et une valeur, qui peut être prédéterminée, étant une valeur des composantes du vecteur;
- on détermine un vecteur du profil de résultat pour le profil de résultat du premier document électronique et un autre pour le profil de résultat du second document électronique, au moins un mot du profil de recherche étant une composante de chacun des vecteurs et la fréquence correspondante d'apparition étant une valeur de la composante du vecteur dans le premier et dans le second document électronique,
- en utilisant le vecteur du profil de recherche et chacun des vecteurs de profil de résultat du premier et du second document électronique, on détermine, pour chacun d'eux, une caractéristique essentielle;
- en utilisant la caractéristique essentielle du premier document électronique et la caractéristique essentielle du second document électronique, on détermine la similitude.

b) il existe un système graphique d'affichage (DIS) pour ordinateur;
c) il existe des moyens pour avoir accès (Z) à
des documents électroniques (D).

**16.** Système selon la revendication 15 dans lequel
il existe des moyens de sélection pour sélectionner
un symbole sur le système graphique d'affichage
(DIS) pour ordinateur.

**FIG 1**

| | R | | |
|---|---|---|---|
| | P 1 | P 2 | PM |
| D 1 | 0.8 | 0.5 | 0.2 |
| D 2 | 0.0 | 0.3 | ... |
| D N | | | |

**FIG 2**

**FIG 3**

# FIG 4

Measles

tests.

summer
Complication

Chicken-Pox

gastro-entritis

Diarrhea

winter

vaccine

illness/outbreak

CU

Mumps

W10

Report
#1/97

Large influenza
outbreak
reported in ...